# EUROPEAN PATENT APPLICATION

(11) **EP 4 607 342 A1**
(43) Date of publication of application: **27.08.2025**
(21) Application number: 22963025.6
(22) Date of filing: 25.10.2022
(51) Int. Cl.: G06F 9/06

(54) **BLOCK INSTRUCTION PROCESSING METHOD AND BLOCK INSTRUCTION PROCESSOR**

(71) Applicant: Huawei Technologies Co., Ltd., Shenzhen, Guangdong 518129 (CN)
(72) Inventor: ZHOU, Ruoyu, Shenzhen, Guangdong 518129 (CN); ZHANG, Guowei, Shenzhen, Guangdong 518129 (CN); ZHU, Fan, Shenzhen, Guangdong 518129 (CN); SU, Fang, Shenzhen, Guangdong 518129 (CN); ZHOU, Xiping, Shenzhen, Guangdong 518129 (CN); LIAO, Heng, Shenzhen, Guangdong 518129 (CN)
(74) Representative: Pfenning, Meinig & Partner mbB
(86) International application number: PCT/CN2022/127507
(87) International publication number: WO 2024/087039

(57) **Abstract**

Embodiments of this application disclose a block instruction processing method and a block instruction processor. The block instruction includes a block header and a block body. The method includes: obtaining an i^{th} block header; dispatching the i^{th} block header to a j^{th} block execution unit based on first information indicated by the i^{th} block header, where the first information indicated by the i^{th} block header includes input register information and output register information of an i^{th} block instruction corresponding to the i^{th} block header; obtaining, by the j^{th} block execution unit, an i^{th} block body based on second information indicated by the i^{th} block header, where the i^{th} block body corresponds to a block body of the i^{th} block instruction, the second information indicated by the i^{th} block header includes a storage location of the i^{th} block body, i is an integer greater than 1, and j is an integer greater than or equal to 1; and executing N microinstructions included in the i^{th} block body, where N is an integer greater than or equal to 1. According to embodiments of this application, execution efficiency of a block instruction can be effectively improved.

## Description

### TECHNICAL FIELD

Embodiments of this application relate to the field of computer technologies, and in particular, to a block instruction processing method and a block instruction processor.

### BACKGROUND

For a long time, development of a general-purpose single-core central processing unit (central processing unit, CPU) at an architecture level is to improve performance by improving a degree of parallelism between instructions. Typically, a superscalar (superscalar) processor architecture improves performance by issuing a plurality of instructions per clock cycle and resolves a dependency relationship between parallel instructions by using a hardware logic unit. However, the superscalar processor architecture usually needs to consume a large chip area, and power consumption increased by the superscalar processor architecture is far higher than improved performance. Consequently, processor energy efficiency is finally reduced. Based on this, a block instruction processor (block instruction processor) is proposed in the industry. The block instruction processor may combine a plurality of instructions into one block instruction for running, to effectively improve a degree of parallelism between the instructions and control power consumption. However, an existing block instruction processor needs to fetch an entire block instruction before executing the block instruction. As described above, because the entire block instruction includes a plurality of instructions, and a specification of the entire block instruction is large, it takes the existing block instruction processor a large amount of time to fetch the block instruction. Consequently, overall performance of the processor is deteriorated, and an increasingly complex and huge computing amount cannot be satisfied.

### SUMMARY

Embodiments of this application provide a block instruction processing method and a block instruction processor, to greatly improve instruction execution efficiency.

The block instruction processing method provided in embodiments of this application may be performed by an electronic device, or the like. The electronic device is a device that can be abstracted as a computer system. An electronic device that supports a block instruction processing function may also be referred to as a block instruction processing apparatus. The block instruction processing apparatus may be the entire electronic device, for example, a smart wearable device, a smartphone, a tablet computer, a notebook computer, a desktop computer, a vehicle-mounted computer, or a server; or may be a system/an apparatus including multiple entire electronic devices; or may be a component in the electronic device, for example, a chip related to the block instruction processing function, for example, a block instruction processor or a system on a chip (system on a chip, SoC). This is not specifically limited in embodiments of this application. The system chip is also referred to as a system on chip.

According to a first aspect, an embodiment of this application provides a block instruction processing method. The block instruction includes a block header and a block body, and the method includes: obtaining an i^{th} block header; dispatching the i^{th} block header to a j^{th} block execution unit based on first information indicated by the i^{th} block header, where the first information indicated by the i^{th} block header includes input register information and output register information of an i^{th} block instruction corresponding to the i^{th} block header; obtaining, by the j^{th} block execution unit, an i^{th} block body based on second information indicated by the i^{th} block header, where the i^{th} block body corresponds to a block body of the i^{th} block instruction, the second information indicated by the i^{th} block header includes a storage location of the i^{th} block body, i is an integer greater than 1, and j is an integer greater than or equal to 1; and executing N microinstructions included in the i^{th} block body, where N is an integer greater than or equal to 1.

In the conventional technology, a block instruction processor subsequently can dispatch and execute the block instruction only after fetching the entire block instruction. However, because most block instructions include a plurality of instructions, and specifications of the block instructions are large, it takes an existing block processor a large amount of time in a fetching phase, and consequently, overall instruction execution efficiency is reduced. According to the method provided in the first aspect, in this embodiment of this application, a conventional block instruction is separated into two parts: a block header and a block body. In other words, each block instruction includes one block header and one block body. The block header is mainly used to express a dependency relationship between block instructions, the block body is mainly used to express specific computing, and the block body may include a plurality of microinstructions. Based on this, in this embodiment of this application, block headers of a plurality of block instructions may be first obtained continuously and quickly, and the block headers are sequentially dispatched to corresponding block execution units based on input register information and output register information indicated by each block header, so that there is almost no dependency between to-be-executed block instructions of different block execution units, to ensure reliable parallelism of the plurality of block execution units. Then, the block execution unit may quickly obtain a corresponding block body based on a block body storage location indicated by the block header and execute the block body. In this way, compared with a solution in which the entire block instruction can be subsequently dispatched and executed only after being completely fetched, and consequently, instruction execution efficiency is low in the conventional technology, in this embodiment of this application, a block instruction structure is fundamentally improved, and a block header is obtained and parsed in advance, to implement pre-scheduling of the block body, thereby greatly improving block instruction execution efficiency.

In a possible implementation, the i^{th} block header is located in a first storage area, the i^{th} block body is located in a second storage area, the first storage area stores a plurality of block headers, the second storage area stores a plurality of block bodies, and the first storage area and the second storage area are storage areas obtained in advance through division in a memory.

In this embodiment of this application, the block header and the block body of the block instruction may be separately stored in different areas in the memory. In some possible embodiments, two different storage areas may be obtained in advance through division in the memory. One is used to store respective block headers of a plurality of block instructions, and the other is used to store respective block bodies of the plurality of block instructions, so that a processor can directly and efficiently obtain the block header or the block body from a corresponding storage area when subsequently executing the block instruction, thereby narrowing an addressing range.

In addition, in some possible embodiments, respective storage areas of the block header and the block body may be dynamically updated as a program runs. For example, an original storage area is reduced, or an original storage area is expanded when space is insufficient. This is not specifically limited in this embodiment of this application. For example, the first storage area corresponding to the i^{th} block header may be a storage area obtained in advance through division in the memory, or the first storage area may be a storage area obtained after corresponding updating is performed based on the storage area obtained in advance through division in the memory. For another example, the second storage area corresponding to the i^{th} block body may be a storage area obtained in advance through division in the memory, or the second storage area may be a storage area obtained after corresponding updating is performed based on the storage area obtained in advance through division in the memory.

In addition, storage locations of the plurality of block headers in the first storage area may be successively adjacent. In other words, there is no gap between two block headers or no block body is inserted between two block headers, to ensure address continuity of the block headers in the memory, and improve block header reading efficiency. It should be noted that, when a disk is damaged, or the like, that is, some storage area in the first storage area may be invalid, storage locations of the plurality of block headers in a valid storage area in the first storage area may be successively adjacent.

In a possible implementation, the method further includes: obtaining an (i-1)^{th} block header. The (i-1)^{th} block header corresponds to a block header of an (i-1)^{th} block instruction. The obtaining an i^{th} block header includes: determining, based on third information indicated by the (i-1)^{th} block header, the i^{th} block instruction executed after the (i-1)^{th} block instruction, and obtaining the i^{th} block header. The third information indicated by the (i-1)^{th} block header includes a branch type of the (i-1)^{th} block instruction.

In this embodiment of this application, the block header in the block instruction may further indicate a branch type of the block instruction to which the block header belongs. Based on this, in this embodiment of this application, a block header of a next to-be-executed block instruction may be quickly determined based on the branch type indicated in the block header, to continuously and quickly fetch a plurality of block headers in sequence. Optionally, in this embodiment of this application, a next block header may be directly predicted and obtained based on a branch type indicated by a current block header in a branch prediction method, to improve block header fetching efficiency.

In a possible implementation, the storage location of the i^{th} block body includes respective storage locations of the N microinstructions in the i^{th} block body, and the obtaining an i^{th} block body based on second information indicated by the i^{th} block header includes: obtaining a k^{th} microinstruction from a storage location corresponding to the k^{th} microinstruction, where k is an integer greater than or equal to 1 and less than or equal to N; and the executing N microinstructions included in the i^{th} block body includes: executing the k^{th} microinstruction.

In this embodiment of this application, a storage location of each microinstruction in the block body may be obtained based on the block body storage location indicated by the block header. When the block body is executed, the microinstructions may be sequentially fetched from the corresponding storage location and executed. In this way, compared with a method in which the entire block instruction needs to be fetched before being computed in the conventional technology, fetching of the microinstructions in this embodiment of this application is faster and more convenient, to effectively improve block instruction execution efficiency.

In a possible implementation, the i^{th} block body corresponds to N virtual registers, the N virtual registers are in a one-to-one correspondence with the N microinstructions in the i^{th} block body, and each virtual register is configured to store an execution result obtained after a corresponding microinstruction is executed.

In this embodiment of this application, a plurality of microinstructions that are sequentially executed in each block body are in a one-to-one correspondence with a plurality of virtual registers. An execution result (namely, an output) of each microinstruction is implicitly written into a virtual register corresponding to the microinstruction. In this way, each microinstruction can express the output of the microinstruction without needing an additional field. In other words, a length of each microinstruction may be completely used to express an operation code and an operand, so that the entire microinstruction is more compact.

In a possible implementation, the executing the k^{th} microinstruction includes: determining, based on a decoding result of the k^{th} microinstruction, that input data of the k^{th} microinstruction includes an execution result of a p^{th} microinstruction in the N microinstructions; obtaining the execution result of the p^{th} microinstruction from a p^{th} virtual register based on a relative distance k-p between the k^{th} microinstruction and the p^{th} microinstruction, and obtaining an execution result of the k^{th} microinstruction based on the execution result of the p^{th} microinstruction, where p is an integer greater than 1 or equal to 1 and less than k; and outputting the execution result of the k^{th} microinstruction to a corresponding k^{th} virtual register for storage.

In this embodiment of this application, as described above, the plurality of microinstructions that are sequentially executed in the block body each correspond to a virtual register used to store an execution result. Therefore, a virtual register corresponding to a current microinstruction may be indexed based on a relative distance between the current microinstruction and a previous microinstruction, to obtain an execution result of the previous microinstruction and complete corresponding computing. For example, a length of the microinstruction may be 16 bits, 10 bits are used to represent an operation code, and two 3 bits are used to represent two operands (namely, inputs). Herein, 3 bits may represent a number from 0 to 7, and is equivalent to that an execution result of any one of eight microinstructions before the current microinstruction can be obtained.

In a possible implementation, the method further includes: committing a current intra-block state of the i^{th} block instruction to a system register if the k^{th} microinstruction is terminated abnormally, where the system register is configured to be accessed by a target program to obtain the intra-block state and process abnormal termination of the k^{th} microinstruction. The intra-block state includes: a storage location of the i^{th} block header, the storage location of the k^{th} microinstruction, and an execution result of a microinstruction executed before the k^{th} microinstruction.

In this embodiment of this application, when a microinstruction in a block instruction is terminated abnormally, a current intra-block state of the block instruction may be committed to the system register, so that a corresponding program subsequently accesses the system register to obtain the state and process the exception, to ensure efficient and accurate exception processing. The system register may be a register shared between blocks.

In a possible implementation, the i^{th} block header further indicates an attribute and a type of the i^{th} block instruction, the attribute includes any one or more of a commit policy, atomicity, visibility, and ordering of the i^{th} block instruction, and the type includes any one or more of a fixed point, a floating point, a custom block body, and accelerator invocation.

In this embodiment of this application, the block header may be further used to express an attribute, a type, and the like of the block instruction. In this way, in this application, a series of information about the block instruction may be mastered at the first time after the block header is quickly fetched, so that the block body can be executed more efficiently and committed based on a policy subsequently.

According to a second aspect, an embodiment of this application provides a block instruction processor. The block instruction includes a block header and a block body, and the block instruction processor includes a block header fetching unit, a block dispatch unit, and a plurality of block execution units. The block header fetching unit is configured to obtain an i^{th} block header. The block dispatch unit is configured to dispatch the i^{th} block header to a j^{th} block execution unit based on first information indicated by the i^{th} block header. The first information indicated by the i^{th} block header includes input register information and output register information of an i^{th} block instruction corresponding to the i^{th} block header. The j^{th} block execution unit is configured to obtain an i^{th} block body based on second information indicated by the i^{th} block header. The i^{th} block body corresponds to a block body of the i^{th} block instruction, the second information indicated by the i^{th} block header includes a storage location of the i^{th} block body, i is an integer greater than 1, and j is an integer greater than or equal to 1. The j^{th} block execution unit is further configured to execute N microinstructions included in the i^{th} block body, where N is an integer greater than or equal to 1.

In a possible implementation, the i^{th} block header is located in a first storage area in a memory, the i^{th} block body is located in a second storage area in the memory, the first storage area stores a plurality of block headers, the second storage area stores a plurality of block bodies, and the first storage area and the second storage area are storage areas obtained in advance through division in the memory.

In a possible implementation, the block header fetching unit is further configured to obtain an (i-1)^{th} block header. The (i-1)^{th} block header corresponds to a block header of an (i-1)^{th} block instruction. The block header fetching unit is specifically configured to: determine, based on third information indicated by the (i-1)^{th} block header, the i^{th} block instruction executed after the (i-1)^{th} block instruction, and obtain the i^{th} block header. The third information indicated by the (i-1)^{th} block header includes a branch type of the (i-1)^{th} block instruction.

In a possible implementation, the storage location of the i^{th} block body includes respective storage locations of the N microinstructions in the i^{th} block body, and the j^{th} block execution unit is specifically configured to: obtain a k^{th} microinstruction from a storage location corresponding to the k^{th} microinstruction, where k is an integer greater than or equal to 1 and less than or equal to N; and execute the k^{th} microinstruction.

In a possible implementation, the i^{th} block body corresponds to N virtual registers, the N virtual registers are in a one-to-one correspondence with the N microinstructions in the i^{th} block body, and each virtual register is configured to store an execution result obtained after a corresponding microinstruction is executed.

In a possible implementation, the j^{th} block execution unit is specifically configured to: determine, based on a decoding result of the k^{th} microinstruction, that input data of the k^{th} microinstruction includes an execution result of a p^{th} microinstruction in the N microinstructions; obtain the execution result of the p^{th} microinstruction from a p^{th} virtual register based on a relative distance k-p between the k^{th} microinstruction and the p^{th} microinstruction, and obtain an execution result of the k^{th} microinstruction based on the execution result of the p^{th} microinstruction, where p is an integer greater than 1 or equal to 1 and less than k; and output the execution result of the k^{th} microinstruction to a corresponding k^{th} virtual register for storage.

In a possible implementation, the j^{th} block execution unit is further configured to: commit a current intra-block state of the i^{th} block instruction to a system register if the k^{th} microinstruction is terminated abnormally. The system register is configured to be accessed by a target program to obtain the intra-block state and process abnormal termination of the k^{th} microinstruction. The intra-block state includes: a storage location of the i^{th} block header, the storage location of the k^{th} microinstruction, and an execution result of a microinstruction executed before the k^{th} microinstruction.

In a possible implementation, the i^{th} block header further indicates an attribute and a type of the i^{th} block instruction, the attribute includes any one or more of a commit policy, atomicity, visibility, and ordering of the i^{th} block instruction, and the type includes any one or more of a fixed point, a floating point, a custom block body, and accelerator invocation.

It should be understood that a power supply device provided in the second aspect of this application is consistent with the technical solution in the first aspect of this application. For specific content and beneficial effects thereof, refer to a power supply device provided in the first aspect. Details are not described herein again.

According to a third aspect, an embodiment of this application provides a computer-readable storage medium. The computer-readable storage medium stores a computer program, and when the computer program is executed by a processor, a function related to the procedure of the block instruction processing method provided in the first aspect is implemented.

According to a fourth aspect, an embodiment of this application provides a computer program. The computer program includes instructions, and when the instructions are executed by a computer, the computer is enabled to perform a function related to the procedure of the block instruction processing method provided in the first aspect.

According to a fifth aspect, an embodiment of this application provides a chip. The chip includes the block instruction processor according to any one of the second aspect, and is configured to implement a function related to the procedure of the block instruction processing method provided in the first aspect. In a possible design, the chip further includes a storage. The storage is configured to store program instructions and data that are necessary for the block instruction processing method. The block instruction processor is configured to invoke program code stored in the storage, to perform a function related to the procedure of the block instruction processing method provided in the first aspect. The chip may form a chip system, and the chip system may also include the chip and another discrete device.

### BRIEF DESCRIPTION OF DRAWINGS

To describe the technical solutions in embodiments of this application more clearly, the following describes the accompanying drawings used in describing embodiments of this application or the background.
FIG. 1a is a diagram of an organization form of a block instruction program according to an embodiment of this application;
FIG. 1b is a diagram of a block instruction structure according to an embodiment of this application;
FIG. 2 is a diagram of a structure of a block header according to an embodiment of this application;
FIG. 3 is a diagram of a structure of a block body according to an embodiment of this application;
FIG. 4 is a diagram of a block header pointer and a microinstruction pointer according to an embodiment of this application;
FIG. 5 is a schematic flowchart of a block instruction processing method according to an embodiment of this application;
FIG. 6 is a diagram of a method for obtaining a block header based on a branch type according to an embodiment of this application;
FIG. 7 is a diagram of an architectural state of a block instruction according to an embodiment of this application;
FIG. 8 is a diagram of a pipeline of a block header and a block body according to an embodiment of this application;
FIG. 9 is a diagram of a structure of a block processor according to an embodiment of this application;
FIG. 10 is a diagram of a structure of another block processor according to an embodiment of this application;
FIG. 11 is a diagram of a structure of still another block processor according to an embodiment of this application;
FIG. 12 is a diagram of a ring network according to an embodiment of this application; and
FIG. 13 is a diagram of a structure of an electronic device according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", "1^{st}", "2^{nd}", "3^{rd}", "4^{th}", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

First, some terms in this application are explained and described, to facilitate understanding of persons skilled in the art.
(1) A superscalar (superscalar) processor architecture improves processor performance by issuing a plurality of instructions per clock cycle and resolves a dependency relationship between parallel instructions by using a hardware logic unit. An instruction out-of-order execution algorithm includes a Tomasulo's algorithm (tomasulo's algorithm). A hardware implementation of the Tomasulo's algorithm includes a reorder buffer (reorder buffer), an out-of-order issue queue (Issue Queue), a reservation station (reservation station), register renaming (register renaming), branch prediction (branch prediction), load/store speculation (load/store speculation), and the like. These modules not only increase difficulty in hardware design verification, but also consume a large chip area. Consequently, power consumption increased by the superscalar processor architecture is far higher than improved performance, and consequently, processor energy efficiency is reduced. Based on this, solutions such as a very long instruction word (very long instruction word, VLIW) architecture and a block instruction processor are successively proposed in the industry, to attempt to obtain a degree of parallelism between instructions at a higher level and a larger granularity, and improve processor performance.
(2) A VLIW architecture depends on a compiler to combine instructions without a dependency relationship into an ultra-long instruction for running, to improve a degree of parallelism between instructions to some extent. However, because the compiler not only needs to consider a dependency relationship between instructions, but also needs to complete instruction scheduling, a VLIW processor inevitably increases design complexity of the compiler. The VLIW processor is not used by a mainstream manufacture because it is difficult to design the compiler due to complexity, compatibility is hindered and commercial ecological development is restricted due to incompatibility between a VLIW instruction set and an existing main graph instruction set, and the like.
(3) A block instruction processor, namely, an instruction block processor (briefly referred to as a block processor), may perform a parallel operation at a granularity of an instruction block. A block instruction (block instruction), namely, an instruction block, includes a plurality of instructions. Because the block instruction processor improves a granularity of instruction expression, CPU hardware may significantly reduce implementation complexity and power consumption, to improve performance and energy efficiency. A dependency relationship diagram between a plurality of instructions is used for expression inside the block instruction, and a conventional branch manner is still used for expression outside the block instruction. Compared with the VLIW, the block instruction processor tends to place a plurality of instructions with a dependency in one block, and place a plurality of instructions without a dependency in different blocks.

To facilitate understanding of embodiments of this application, the following further analyzes and provides a technical problem to be specifically resolved in this application. As described above, an existing block instruction processor can improve a degree of parallelism between instructions at a granularity of an instruction block, to improve processor performance. However, because an entire block instruction includes a plurality of instructions, a specification of the entire block instruction is large, and the existing block instruction processor needs to fetch the entire block instruction before performing subsequent analysis of a degree of parallelism between instructions, issuing, execution, and the like, it takes the existing block instruction processor a large amount of time in a fetching phase, thereby seriously affecting overall instruction execution efficiency. Therefore, to resolve a problem that an actual requirement cannot be met in a current block instruction technology, technical problems to be actually resolved in this application include the following aspects: The block instruction is separated into two parts: a block header and a block body, the block header is mainly used to express a dependency relationship between block instructions, and the block body expresses specific computing of the block instruction. Further, the dependency relationship and the degree of parallelism between block instructions are obtained through continuous quick fetching and preprocessing on the block header, so that corresponding block bodies are accurately and efficiently dispatched to different pipelines for parallel execution, to effectively improve block instruction execution efficiency.

First, a block instruction structure provided in this application is described.

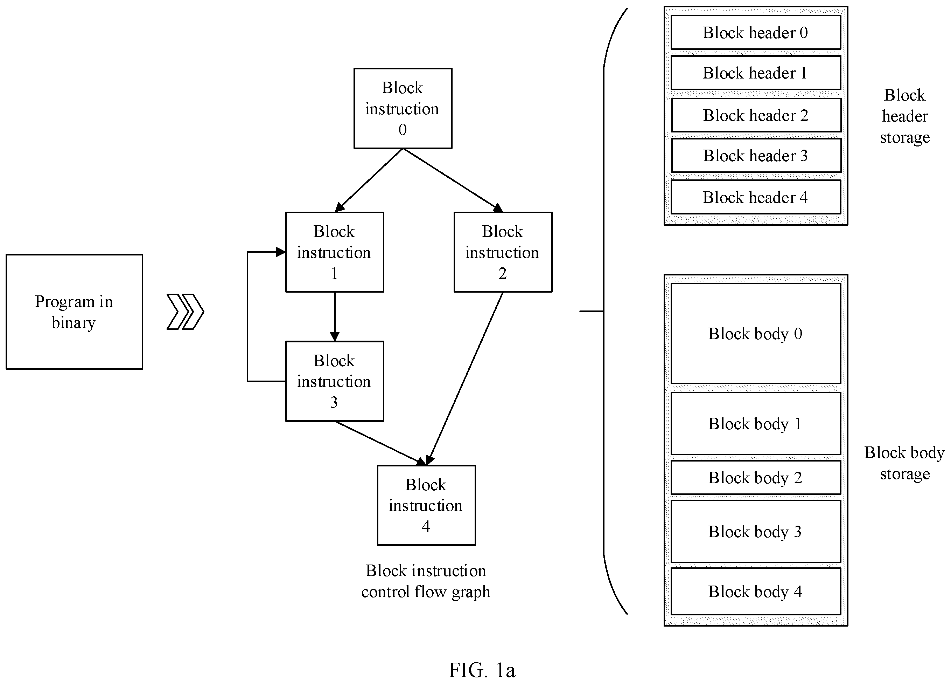

FIG. 1a is a diagram of an organization form of a block instruction program according to an embodiment of this application. As shown in FIG. 1a, in a block instruction scenario, a computer program needs to organize logic of the program into a binary code at a granularity of a block. Then, a block processor parses a block instruction, to execute the program at a granularity of the block instruction. One fixed-length reduced instruction set computer (reduced instruction set computer, RISC) instruction or one complex instruction set computer (complex instruction set computer, CISC) instruction of a conventional CPU can complete only one computing operation, but one block instruction of the block processor can complete a plurality of complex computing operations.

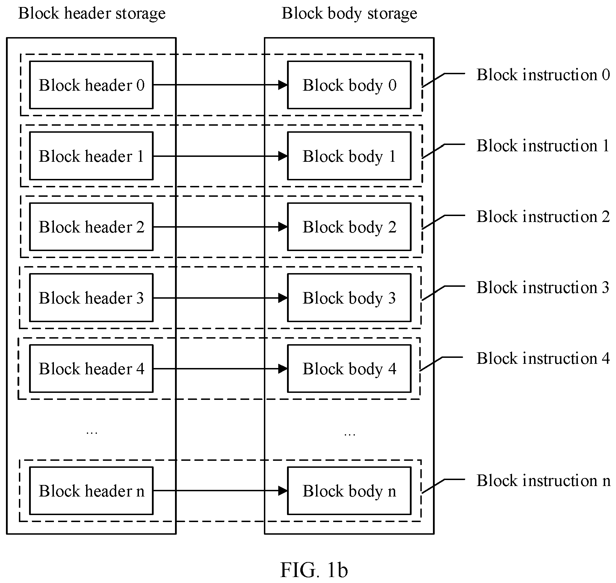

Further, as shown in FIG. 1a, in this application, the block instruction is designed into two parts: a block header (block header) and a block body (block body/payload). The program needs to separate the block header from the block body, and store the block header and the block body in different memory areas. FIG. 1b is a diagram of a block instruction structure according to an embodiment of this application. As shown in FIG. 1b, a block instruction 0 includes a block header 0 and a block body 0, a block instruction 1 includes a block header 1 and a block body 1, a block instruction 2 includes a block header 2 and a block body 2, and the like. The block header 0, the block header 1, the block header 2, a block header 3, and a block header 4 may be stored in a storage area of the block header, and the block body 0, the block body 1, the block body 2, a block body 3, and a block body 4 are stored in a storage area of the block body. The storage area of the block header and the storage area of the block body may be two fixed storage areas obtained through division in a memory.

Specifically, the block header may express an attribute and a type of the block instruction, an input register, an output register, a pointer of a block header of a next block instruction, a pointer of a block body of a current block instruction, and the like. Optionally, block headers are usually placed by a compiler at adjacent locations in the memory. For example, memory addresses of the block header 0, the block header 1, the block header 2, the block header 3, and the block header 4 shown in FIG. 1b may be successively adjacent, so that the memory addresses may be continuously read subsequently, to improve block header fetching efficiency.

Specifically, the block body may express specific computing of the block instruction, and may include a plurality of microinstructions. As shown in FIG. 1a, the block header 0 may involve a large quantity of computing operations, and include a large quantity of microinstructions. Therefore, a large amount of storage space is occupied. Optionally, if computing operations performed by two block instructions are completely the same, block bodies of the two block instructions may be the same. For example, if computing operations of the block instruction 0 and a block instruction 4 are completely the same, a block body of the block instruction 4 may also be the block body 0. For another example, if a computing operation of the block instruction 4 is partially the same as a computing operation of the block instruction 0, a block body of the block instruction 4 may share a part of the block body 0. It should be noted that a group of block headers represents control and a data flow diagram of the program, and is a "skeleton" of program execution. A group of block bodies represents "blood and flesh" of the program.

The following separately describes in detail specific structures and corresponding functions of a block header and a block body in a block instruction provided in this application.

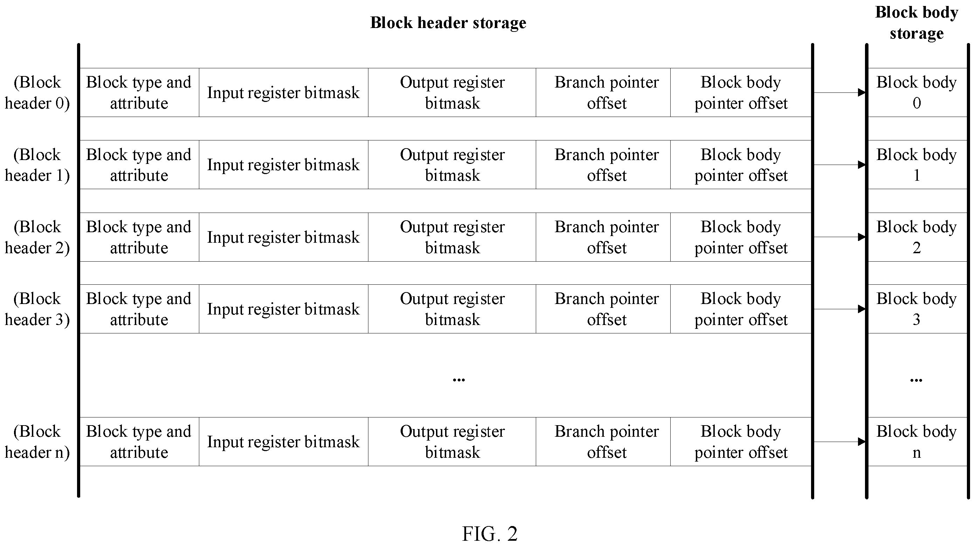

FIG. 2 is a diagram of a structure of a block header according to an embodiment of this application. As shown in FIG. 2, a block header of a block instruction may be a fixed-length RISC instruction, for example, a 128-bit RISC instruction, and may include fields such as a type and an attribute of the block instruction, an input register bitmask (Bitmask), an output register bitmask, a branch pointer offset, and a block body pointer offset. Details are as follows:
The type of the block instruction includes a computing type, for example, a fixed point, a floating point, a custom block body, accelerator invocation, and the like. The custom block body means that a user may add some custom instructions. Alternatively, in a type of the custom block body, a block instruction may be essentially hardware such as an accelerator, and is configured to perform operations such as compression and decompression. In this case, the block instruction does not have an actual block body, but an input/output may be abstracted as a block header.

The attribute of the block instruction includes a commit policy of the block instruction, for example, a quantity of times that the block instruction is repeatedly executed, and whether execution of the block instruction needs to be atomic/visible/ordered.

The input register bitmask indicates an input register of the block instruction. For one block instruction, a maximum of 32 registers may be used as an input. Names (identity, ID) of the 32 input registers can be expressed in a format of a bitmask.

The output register bitmask indicates an output register of the block instruction. For one block instruction, a maximum of 32 registers may be used as an output. IDs of the 32 output registers can be expressed in a format of a bitmask.

It should be noted that the 32 input/output registers (R0 to R31) are all physical registers (namely, general-purpose registers), and are registers shared between blocks. If a block instruction exactly has 32 inputs, each bit in a 32-bit bitmask of the block instruction is 1. If a block instruction exactly has 16 outputs, corresponding 16 bits in a 32-bit bitmask of the block instruction are 1 (for example, if 11110000110000011101111001010001, output registers of the block instruction are 16 general-purpose registers R0, R4, R6, R9, R10, R11, R12, R14, R15, R16, R22, R23, R28, R29, R30, and R31). That is, bits corresponding to general-purpose registers that are used as inputs/outputs of the block instruction are 1. Optionally, if a CPU has only 16 general-purpose registers, each block instruction also has a maximum of 16 input/output registers, and a 16-bit bitmask may indicate input/output registers of each block instruction. This is not specifically limited in this embodiment of this application.

The branch pointer offset indicates a storage location of a block header of a next to-be-executed block instruction after execution of a current block instruction is completed. Specifically, a block header pointer is expressed by using an offset. A next block header pointer is obtained by adding the branch pointer offset to a current block header pointer. That is, a storage location of a next block header is obtained.

The block body pointer offset indicates a storage location of a block body of a current block instruction. Specifically, a block body pointer is expressed by using an offset. A current block body pointer is obtained by adding the block body pointer offset to a previous block body pointer. That is, a storage location of a current block body is obtained, and is usually a start location of the current block body (namely, a location of a first microinstruction). An end location of the block body may be obtained based on a size of the block body (namely, a quantity of microinstructions).

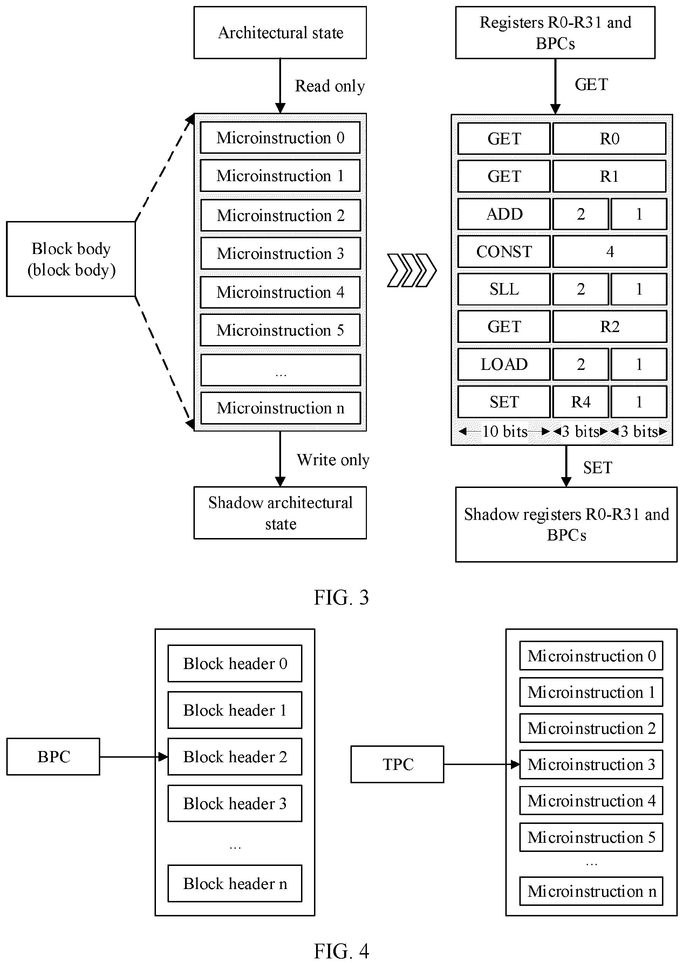

FIG. 3 is a diagram of a structure of a block body according to an embodiment of this application. As shown in FIG. 3, the block body may include a series of microinstructions such as a microinstruction 0, a microinstruction 1, a microinstruction 2, a microinstruction 3, ..., and a microinstruction n, and all the microinstructions are executed in sequence. It should be noted that different block body formats may be defined for different types of block instructions. A basic standard block instruction is used as an example. An intra-block microinstruction (block microinstruction) may be a 16-bit fixed-length RISC instruction. For the standard block instruction, each microinstruction in the block body may be an instruction with a maximum of two inputs and one output.

As shown in FIG. 3, an input of a block instruction may be read from an output register of another block instruction by using a get instruction in a block body. For example, a 1^{st} microinstruction (get R0) in FIG. 3 reads data written by another block instruction into a general-purpose register R0. For another example, a 2^{nd} microinstruction (get R1) in FIG. 3 reads data written by another block instruction into a general-purpose register R1. For still another example, a 6^{th} microinstruction (get R2) in FIG. 3 reads data written by another block instruction into a general-purpose register R2.

As shown in FIG. 3, an output of a block instruction may be written into a corresponding output register by using a set instruction in a block body, in other words, written back to one or more of the foregoing 32 physical registers. In conclusion, the block instruction may access the general-purpose register by using an explicit get/set instruction in a microinstruction, to obtain an output of another block instruction, or output an execution result of the block instruction. In addition, because input/output registers of a plurality of block instructions may overlap, to ensure a degree of parallelism between the block instructions, as shown in FIG. 3, when each block instruction is output, an execution result may be first temporarily written to a shadow register corresponding to a general-purpose register. A subsequent block instruction may also obtain an input from a corresponding shadow register by using a get instruction. Finally, all block instructions may sequentially commit execution results temporarily stored in shadow registers to corresponding physical registers.

Optionally, in addition to the foregoing special get instruction and set instruction, most inputs of other microinstructions in the block body may come from an output of a preceding microinstruction in the current block body. In this embodiment of this application, an execution result of each microinstruction in the block body may be implicitly written into a virtual register corresponding to the microinstruction. Then, a current microinstruction may index, based on a relative distance between instructions, an execution result that is of a preceding microinstruction and that is temporarily stored in a virtual register as an input. In this way, in microinstruction encoding, each microinstruction may not need to express an output register of the microinstruction. To be specific, each microinstruction may express only an operation code of the microinstruction and a maximum of two input registers (namely, a maximum of two relative distances). For example, the microinstruction is a 16-bit fixed-length RISC instruction, and a structure of the microinstruction may be shown in Table 1.

**Table 1**

| Bits 15 to 13 | Bits 12 to 10 | Bits 9 to 0 |
|---|---|---|
| Link (relative distance) 0 | Link (relative distance) 1 | Opcode (Operation code) |

As shown in Table 1, the 16-bit microinstruction is used as an example. 10 bits may express the operation code, and two 3 bits may respectively express two input registers (namely, two relative distances). In this case, the relative distance is limited to 1 to 8. To be specific, the current microinstruction can only index execution results of a 1^{st} microinstruction to an 8^{th} microinstruction before the current microinstruction as inputs. For example, two inputs of a 3^{rd} microinstruction (add 1 2) in FIG. 3 respectively come from execution results of two instructions (namely, the 1^{st} instruction and the 2^{nd} microinstruction) whose relative distances from the 3^{rd} microinstruction are 1 and 2. Optionally, if there is only one input, all remaining 6 bits other than the operation code may be used to represent one input register. In this case, the relative distance is limited to 1 to 64.

For example, assembly of the block instruction may be as follows:

| | |
|---|---|
| get | R0 |
| get | R1 |
| add | T#1 T#2 |
| const | #2 |
| s11 | T#1 T#2 |
| get | R2 |
| add | T#2 T#1 |
| ld | [T#2, #0] |
| set | T#1 R3 |

The 3^{rd} microinstruction (add T#1 T#2) in the block is used as an example. T#1 represents a virtual register corresponding to a microinstruction whose relative distance from the current microinstruction (add T#1 T#2) is 1. The virtual register stores an execution result of the microinstruction get R0. T#2 represents a virtual register corresponding to a microinstruction whose relative distance from the current microinstruction (add T#1 T#2) is 2. The virtual register stores an execution result of the microinstruction get R1. Therefore, an actual computing operation performed by the 3^{rd} microinstruction (add T#1 T#2) is adding data in the registers R0 and R1.

As described above, based on the structure of the block header and the structure of the block body, the block instruction provided in this application further defines two levels of program pointers. FIG. 4 is a diagram of a block header pointer and a microinstruction pointer according to an embodiment of this application. As shown in FIG. 4, details are as follows:
A block header pointer (block program counter, BPC) is used to record a location of a block header of a block instruction that is being executed currently. A next block header pointer may be obtained by adding a current block header pointer to a branch pointer offset indicated by a current block header. That is, a storage location of a block header of a next to-be-executed block instruction in a memory is obtained.

A microinstruction pointer (temporal program counter, TPC) is used to record a location of a microinstruction that is being executed currently. Because the block body usually includes a plurality of microinstructions, a location of each microinstruction in the block body may be represented by a microinstruction pointer.

In conclusion, a combination of the BPC and the TPC may point to a microinstruction that is being executed in a current block instruction. Each time execution of a microinstruction is completed, the TPC moves to a next microinstruction. If execution of all microinstructions in the current block body is completed, the BPC moves to a next block header.

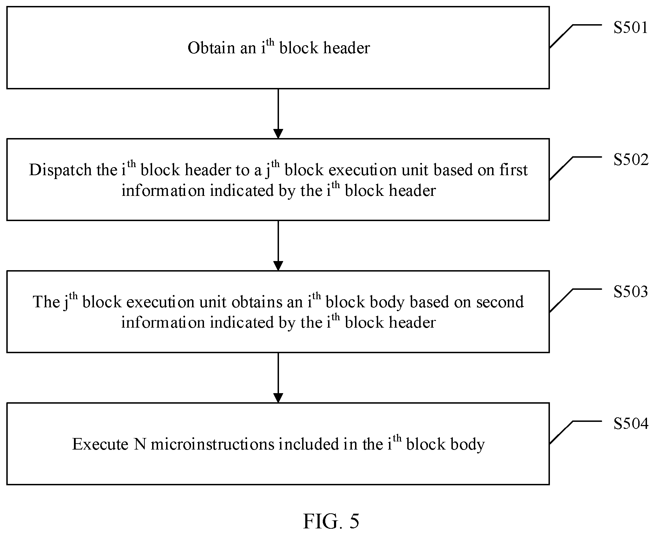

Based on the detailed descriptions of the block instruction structure in embodiments corresponding to FIG. 1a to FIG. 4, an embodiment of this application further provides a block instruction processing method. FIG. 5 is a schematic flowchart of a block instruction processing method according to an embodiment of this application. The method may be applied to a processor in an electronic device, and may be specifically applied to a block instruction processor. As shown in FIG. 5, the method may include steps S501 to S504.

Step S501: Obtain an i^{th} block header.

Specifically, a block processor obtains the i^{th} block header in sequence. The i^{th} block header is a block header of an i^{th} block instruction. Herein, i is an integer greater than or equal to 1. It should be noted that, in this embodiment of this application, a block header fetching sequence needs to be a theoretical execution sequence of block instructions in a program running process, namely, a sequence in which all block instructions finally commit execution results of all block instructions in sequence. In addition, sequence numbers such as a block header 0, a block header 1, a block header 2, and a block header 3 shown in all accompanying drawings in embodiments of this application represent only a block header fetching sequence, and are unrelated to storage locations of the block headers, or the like in a memory.

Optionally, before obtaining the i^{th} block header in sequence, the block processor further obtains an (i-1)^{th} block header in sequence. The (i-1)^{th} block is a block header of an (i-1)^{th} block instruction. The block processor may determine, based on third information indicated by the (i-1)^{th} block header, the i^{th} block instruction executed after the (i-1)^{th} block instruction, and obtain the corresponding i^{th} block header. The third indication information indicated by the (i-1)^{th} block header may include a branch type of the (i-1)^{th} block instruction. In short, the block processor may quickly determine a next to-be-executed block instruction based on a branch type indicated by a current block header, and obtain a corresponding block header.

Optionally, in some embodiments of this application, various branch types indicated by block headers may be shown in Table 2.

**Table 2**

| | Branch type | Description |
|---|---|---|
| 1 | BNEXT.FALL | Fall-through: A next adjacent block instruction is pointed to. |
| | | NEXTBPC=BPC+<sizeof(block_header)> |
| 2 | BNEXT.DIRECT<label> | Direct branch: A block instruction to which BNEXT points is executed. |
| | | NEXTBPC=BPC+<label_offset> |
| 3 | BNEXT.CALL<label> | Call: A block instruction to which BNEXT points is executed, and a fall-through BPC address is recorded in a link register (link register). If an intra-block microinstruction modifies LINKREG, a modification takes effect after a block. |
| | | NEXTBPC=BPC+<label_offset> |
| | | LINKREG=BPC+<sizeof(block_header)> |
| 4 | BNEXT.COND<label> | Conditional branch: Two branch addresses are computed, and one of the two addresses is computed by an intra-block microinstruction SETBPC.COND. |
| | | If a computing result of SETBPC.COND is True (true), a block instruction to which BNEXT points is executed. |
| | | If a computing result of SETBPC.COND is False (false), a fall-through block instruction is executed. |
| | | BPC_TRUE=BPC+<label_offset> |
| | | BPC_FALSE=BPC+<sizeof(block_header)> |
| | | NEXTBPC=BSTATE.BPC? BPC_TRUE: BPC_FALSE |
| 5 | BNEXT.IND | Indirect branch: A microinstruction SETBPC computes and determines a next block instruction address. |
| | | NEXTBPC=BSTATE.BPC |
| 6 | BNEXT.INDCALL | Indirect call: A microinstruction SETBPC computes and determines a next block instruction address, and records a fall-through BPC address in a link register (link register). |
| | | NEXTBPC=BSTATE.BPC |
| | | LINKREG=BPC+<sizeof(block_header)> |
| 7 | BNEXT.RET | Return: The branch type is the same as an indirect branch. ARET prompt is additionally provided for hardware. |
| | | NEXTBPC=BSTATE.BPC |
| 8 | BNEXT.CONCAT | Concatenate: A next fall-through block header and a current block header need to form a block header with a width of 256 bits. An attribute of a current block falls through to a next block header. |

As shown in Table 2, the branch types indicated by the block headers may include "fall-through (FALL)", "direct branch (DIRECT)", "call (CALL)", "conditional branch (COND)", "indirect branch (IND)", "indirect call (INDCALL)", "return (RET)", "concatenate (CONCAT)", and the like, and may further include any other possible branch type. This is not specifically limited in this embodiment of this application. As shown in Table 2, when the branch type is "fall-through", "direct branch", or "call", a branch can be completed by only parsing a block header without performing microinstruction computing in a block. When the branch type is "indirect branch", "conditional branch", "indirect call", or "return", an address of a next block header usually needs to be obtained through microinstruction computing in a block. For example, the microinstruction SETBPC is used to set a BPC absolute address of a next block instruction. For another example, the microinstruction SETBPC.COND is used to compute and determine a block header address of a next block instruction in two possible branch block header addresses.

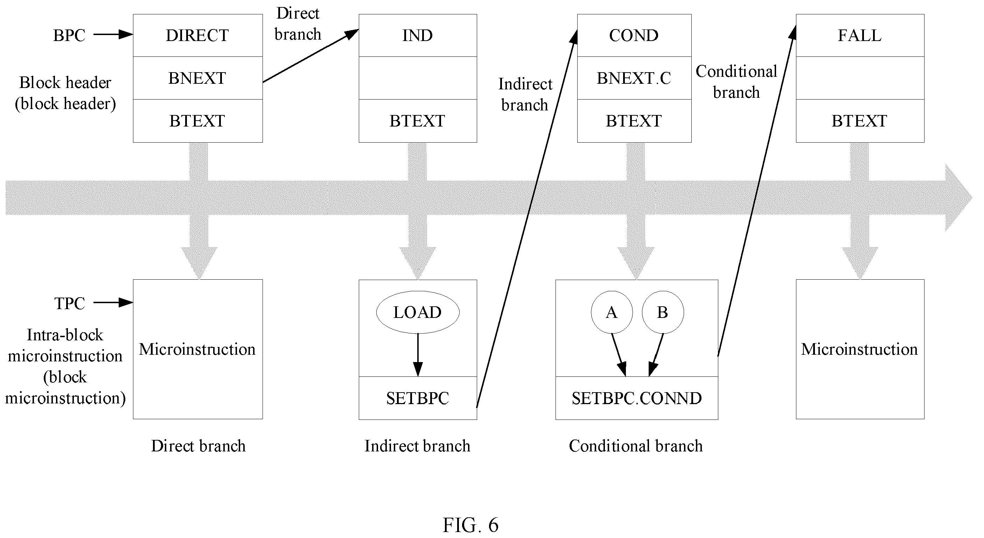

FIG. 6 is a diagram of a method for obtaining a block header based on a branch type according to an embodiment of this application.

For example, as shown in FIG. 6, a branch type indicated by the block header 0 is direct branch (DIRECT). Based on this, the block processor may directly determine that a block instruction to which BNEXT points in the block header is a next to-be-executed block instruction, and obtain a corresponding block header (namely, a block header 1 shown in FIG. 6).

For example, as shown in FIG. 6, a branch type indicated by the block header 1 is indirect branch (IND). It can be learned from Table 2 that the block processor theoretically needs to obtain a block body based on a block body address indicated in the block header 1, and then obtains an address (namely, an address of a block header) of a next to-be-executed block instruction through computing by using a microinstruction SETBPC in the block body, to obtain a corresponding block header (namely, the block header 2 shown in FIG. 6). However, in some embodiments of this application, to improve block header fetching efficiency, the block processor may quickly determine the next to-be-executed block instruction through branch prediction only based on the branch type indicated by the current block header 1, to directly obtain the block header 2, without a need to obtain and execute a corresponding microinstruction.

For example, as shown in FIG. 6, the branch type indicated by the block header 2 is conditional branch (COND). It can be learned from Table 2 that the block processor theoretically needs to obtain a block body based on a block body address indicated in the block header 2, and then obtains an address (namely, an address of a block header) of a next to-be-executed block instruction through computing by using a microinstruction SETBPC.COND in the block body, to obtain a corresponding block header (namely, a block header 3 shown in FIG. 6). Similarly, to save time and improve efficiency, the block processor may directly predict a next to-be-executed block instruction through branch prediction based on the branch type indicated by the block header 2, to directly obtain the block header 3.

It should be noted that branch prediction accuracy is usually high. Therefore, in this embodiment of this application, when block headers are obtained in sequence, a next block header may be usually obtained quickly and efficiently through branch prediction based on a branch type indicated by a current block header, to greatly improve block header fetching efficiency, and improve overall block instruction execution efficiency. It may be understood that, if an original branch prediction result obtained through computing is incorrect when the microinstruction is subsequently executed, the block processor may still re-obtain a correct block header based on the computing result. Details are not described herein again.

Step S502: Dispatch the i^{th} block header to a j^{th} block execution unit based on first information indicated by the i^{th} block header.

Specifically, the block processor may include a plurality of block execution units. The block processor may dispatch the i^{th} block header to the corresponding j^{th} block execution unit based on the first information indicated by the i^{th} block header. The j^{th} block execution unit is one of the plurality of block execution units included in the block processor, and j is an integer greater than or equal to 1.

Optionally, the first information indicated by the i^{th} block header may include input register information and output register information of the i^{th} block instruction to which the i^{th} block header belongs. The input register information and the output register information may be an input register bitmask and an output register bitmask in the structure of the block header shown in FIG. 2.

It may be understood that the input register information and the output register information may reflect a dependency relationship between block instructions. There may be a large quantity of or even a maximum quantity of dependency relationships between the i^{th} block instruction and another to-be-executed block instruction on the j^{th} block execution unit. In other words, the block processor may dispatch a block header to a block execution unit with a large quantity of dependencies as much as possible based on input register information and output register information indicated in each block header, so that to-be-executed block instructions of different block execution units almost have no dependency, and different block execution units almost exchange no data, to ensure reliable parallelism of a plurality of block execution units.

Step S503: The j^{th} block execution unit obtains an i^{th} block body based on second information indicated by the i^{th} block header.

Specifically, the j^{th} block execution unit in the block processor may obtain and execute the i^{th} block body based on the second information indicated by the i^{th} block header. The i^{th} block body is a block body of the i^{th} block instruction, and the i^{th} block body may include one or more microinstructions.

The second information indicated by the i^{th} block header may include a storage location of the i^{th} block body, for example, a block body pointer offset in the structure of the block header shown in FIG. 2. A start location of a block body may be obtained based on the block body pointer offset, and a storage location of each microinstruction may be obtained with reference to a quantity of microinstructions in the block body and a length of each microinstruction. In this way, the j^{th} block execution unit may sequentially obtain each microinstruction in the i^{th} block body from a corresponding storage location. For example, a k^{th} microinstruction in the i^{th} block body is obtained from a corresponding storage location.

Optionally, the i^{th} block header may be located in a first storage area, and the i^{th} block body may be located in a second storage area. The first storage area and the second storage area may be storage areas obtained in advance through division in the memory. The first storage area may store block headers of a plurality of block instructions, and the second storage area may store block bodies of the plurality of block instructions. That is, the block headers and the block bodies of the block instructions may be stored in different areas in the memory. In addition, storage locations of the block headers of the plurality of block instructions in the first storage area may be successively adjacent. In other words, there is no gap between two block headers or no block body is inserted between two block headers, to ensure address continuity of the block headers in the memory, and improve block header reading efficiency.

Step S504: Execute N microinstructions included in the i^{th} block body.

Specifically, the j^{th} block execution unit in the block processor executes the N microinstructions included in the i^{th} block body. Herein, N is an integer greater than or equal to 1. The N microinstructions may be all or some microinstructions included in the i^{th} block body. The block processor may sequentially execute the N microinstructions, for example, sequentially execute the k^{th} microinstruction and a (k+1)^{th} microinstruction in the N microinstructions. Herein, k is an integer greater than or equal to 1 and less than or equal to N.

Optionally, based on the descriptions of the embodiment corresponding to FIG. 3, the i^{th} block instruction may correspond to N virtual registers, or the i^{th} block body corresponds to N virtual registers, and the N virtual registers are sequentially in a one-to-one correspondence with the N microinstructions in the i^{th} block body. In this way, that the j^{th} block execution unit executes the k^{th} microinstruction in the i^{th} block body may include: decoding the k^{th} microinstruction; and determining, based on a decoding result, that input data of the k^{th} microinstruction includes an execution result of a p^{th} microinstruction in the N microinstructions. That is, an input of the k^{th} microinstruction comes from an output of the p^{th} microinstruction. Herein, p is an integer greater than 1 or equal to 1 and less than k. Then, the j^{th} block execution unit may obtain the execution result of the p^{th} microinstruction from a p^{th} virtual register in the N virtual registers based on a relative distance k-p between the k^{th} microinstruction and the p^{th} microinstruction, and obtain an execution result of the k^{th} microinstruction through computing by using the execution result of the p^{th} microinstruction as an input. Finally, the j^{th} block execution unit may output, to a corresponding k^{th} virtual register for storage, the execution result that is of the k^{th} microinstruction and that is obtained through computing, to facilitate subsequent indexing by another microinstruction.

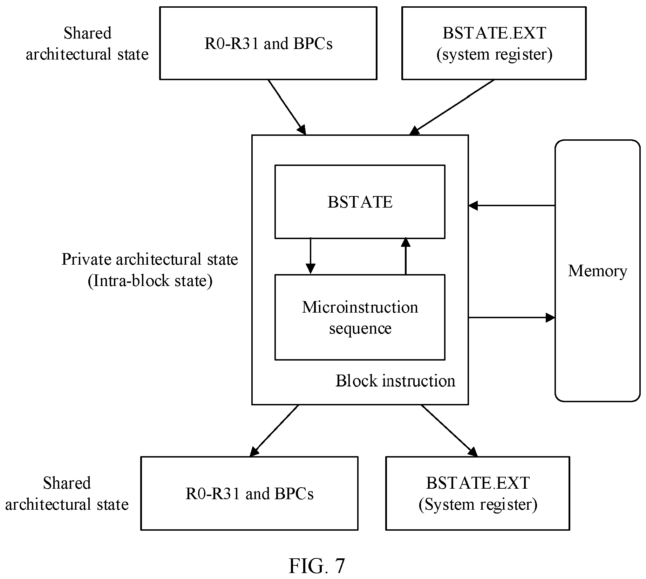

Further, FIG. 7 is a diagram of an architectural state of a block instruction according to an embodiment of this application. As shown in FIG. 7, the block processor defines two levels of architectural states, an upper layer is an inter-block shared architectural state, and a lower layer is an intra-block private architectural state.

The inter-block shared architectural state is that different block instructions share a same processor state (Processor State), and is also referred to as a global state (Global State). As shown in FIG. 7, the inter-block shared architectural state mainly includes states of general-purpose registers (R0 to R31), BPCs, and system registers (BSTATE.EXT).

The intra-block private architectural state is a local state (Local State) defined in each block instruction. As shown in FIG. 7, the intra-block private architectural state mainly includes states of a virtual register and a TPC that correspond to an intra-block microinstruction.

It should be noted that the block instruction defines a series of changes to the architectural state. Specifically, an intra-block state is created when a block instruction is decoded. When execution of a current block instruction ends, that is, after execution of all microinstructions in a current block is completed, the intra-block state is released, including clearing virtual registers corresponding to all the microinstructions in the block. Based on this, the block processor in this embodiment of this application may execute a program and a branch based on a granularity of a block instruction, and maintain an accurate execution state based on the two levels of architectural states (Global-Local) defined by the block instruction.

Usually, an execution state of any block instruction may include the following two states:
(1) Normal commit of the block instruction (Block Commit Success): The intra-block microinstruction is executed normally, is not abnormal, and is not interrupted. The intra-block state is successfully committed. In other words, the intra-block state is successfully released.
(2) Abnormal termination of the block instruction (Block Exception Terminate): The intra-block microinstruction cannot be executed normally. The intra-block state (BSTATE) points to an abnormally terminated microinstruction and the foregoing description of the microinstruction. The block processor may pack and copy the intra-block state to the system register, so that a corresponding program subsequently accesses the system register to obtain the intra-block state and process the exception, to ensure efficient and accurate exception processing. Optionally, when a microinstruction in a block instruction is abnormally terminated (for example, the block instruction is abnormally terminated because an interrupt sent by an outside is received when an error occurs in memory access or an addition operation is performed), an intra-block state of the block instruction includes a TPC of a currently abnormally terminated microinstruction, and execution results (T#1 to T#8) of a plurality of microinstructions (which may usually be 8 microinstructions) before the microinstruction, and optionally, may further include a result that is written (set) into the shadow register in the current block instruction.

For example, if the k^{th} microinstruction in the i^{th} block body is abnormally terminated, a current intra-block state of the i^{th} block instruction may be committed to the system register. The current intra-block state of the i^{th} block instruction may include a storage location (namely, a BPC) of the i^{th} block header, a storage location (namely, a TPC) of the k^{th} microinstruction, and an execution result of a microinstruction executed before the k^{th} microinstruction. A subsequent target program (for example, a program used for exception processing) may access the system register to obtain an intra-block state, and process abnormal termination of the k^{th} microinstruction.

As described above, the intra-block state is released (or cleared) regardless of whether a block instruction is normally committed or abnormally terminated (or abnormally exited). To obtain an abnormal terminated state of the block instruction, the system register needs to be accessed.

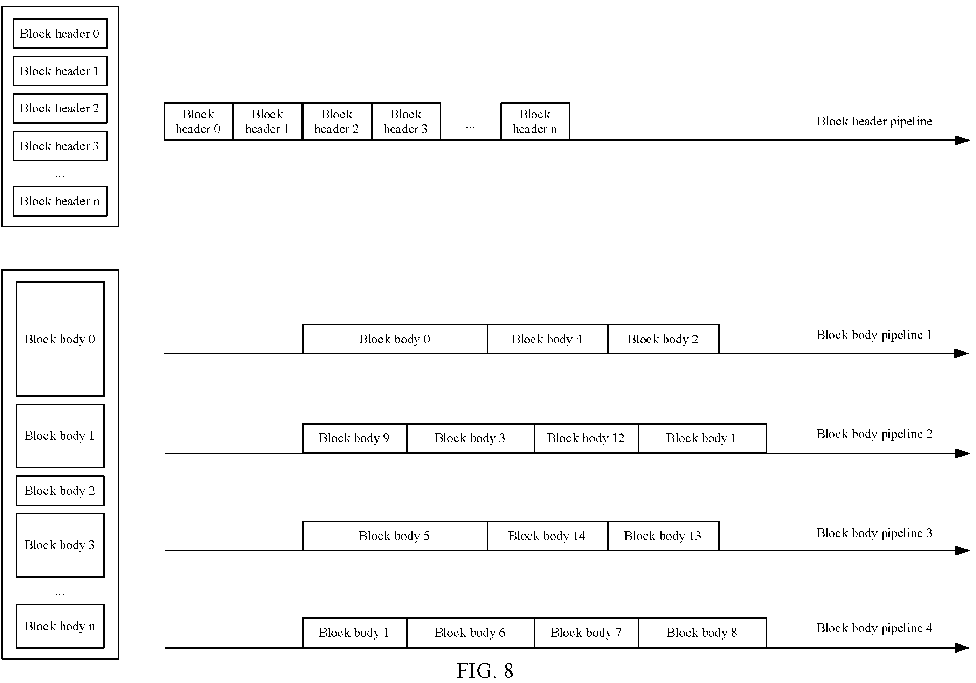

In conclusion, FIG. 8 is a diagram of a pipeline of a block header and a block body according to an embodiment of this application. As shown in FIG. 8, each block header may be a fixed-length RISC instruction, and the block processor may quickly and sequentially obtain and parse the block header in a form of a pipeline, to obtain information such as a branch type, an input/output register, and a block storage location that are indicated in the block header. Clearly, parsing of the block header is much earlier than computing of the block body. Based on this, the block processor in this embodiment of this application may execute the block header in advance to pre-allocate an execution resource of the block body, which may include: block body pre-scheduling, block body input/output resource allocation, out-of-order execution and reordering of the block body, and the like.

For example, as shown in FIG. 8, the block processor continuously obtains the block header 0, the block header 1, the block header 2, the block header 3, and the like in sequence, and sequentially dispatches, based on information obtained by parsing the block headers, the block headers to a pipeline that has more dependencies with the block headers. For example, the block header 0 is dispatched to a block body pipeline 1 (corresponding to a 1^{st} block execution unit), the block header 1 is dispatched to a block body pipeline 4 (corresponding to a 4th block execution unit), the block header 2 is dispatched to a block body pipeline 1 (corresponding to the 1^{st} block execution unit), the block header 3 is dispatched to a block body pipeline 2 (corresponding to a 2^{nd} block execution unit), a block header 4 is dispatched to a block body pipeline 1 (corresponding to the 1^{st} block execution unit), a block header 5 is dispatched to a block body pipeline 3 (corresponding to a 3^{rd} block execution unit), and the like. Details are not described herein again. There may be a dependency between the block body 0, the block body 2, and the block body 4 in the block body pipeline 1; there may be a dependency between the block body 1, a block body 6, a block body 7, and a block body 8 in the block body pipeline 4; and there may be no dependency or a small quantity of dependencies between a block body in the block body pipeline 1 and a block body in the block body pipeline 4. This facilitates smooth parallelism of a plurality of pipelines. Then, each block body pipeline sequentially obtains and executes block bodies corresponding to block headers. For example, the 1^{st} block execution unit sequentially obtains and executes the block body 0, the block body 4, and the block body 2 in the block body pipeline 1; the 2nd block execution unit sequentially obtains and executes a block body 9, the block body 3, a block body 12, and the block body 1 in the block body pipeline 2; the 3^{rd} block execution unit sequentially obtains and executes the block body 5, a block body 14, and a block body 13 in the block body pipeline 3; and the 4th block execution unit sequentially obtains and executes the block body 1, the block body 6, the block body 7, and the block body 8 in the block body pipeline 4.

As shown in FIG. 8, in some embodiments of this application, in consideration of priorities and sizes of block bodies, out-of-order execution of the block bodies may be scheduled on each pipeline, to improve block instruction execution efficiency. For example, the block body 4 may be executed before the block body 2 in the block body pipeline 1. For example, the block body 14 may be executed before the block body 13 in the block body pipeline 3. This is not specifically limited in this embodiment of this application.

As shown in FIG. 8, when executing the block instruction, the block processor in this embodiment of this application includes at least one block header pipeline (used to continuously obtain a block header) and a plurality of block body pipelines (used to execute block bodies in parallel), to implement out-of-order parallel execution of the block instructions. In this way, the block processor in this embodiment of this application may perform management at a granularity of a block header, implement out-of-order issuing and parallel computing of block instructions, and complete large-scale parallel instruction computing with lower complexity.

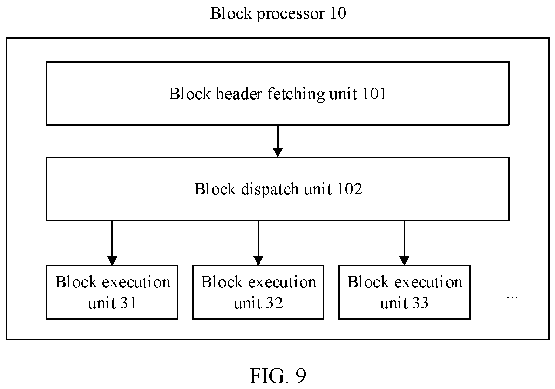

Based on the description of the foregoing embodiment of the block instruction processing method, an embodiment of this application further provides a block processor (Block Core). FIG. 9 is a diagram of a structure of a block processor according to an embodiment of this application. As shown in FIG. 9, a block processor 10 may include a block header fetching unit 101, a block dispatch unit 102, and a plurality of block execution units, for example, including a block execution unit 31, a block execution unit 32, and a block execution unit 33. The block header fetching unit 101 is connected to the block dispatch unit 102, and the block dispatch unit 102 is connected to the plurality of block execution units such as the block execution unit 31, the block execution unit 32, and the block execution unit 33.

The block header fetching unit 101 is configured to sequentially obtain an i^{th} block header from a memory. i is an integer greater than or equal to 1. Optionally, in a scenario such as high-performance computing, to further improve block header fetching efficiency, a block header cache (block header cache) may be further disposed in the block processor 10. In this way, the block header fetching unit 101 may directly obtain the i^{th} block header from the block header cache in sequence. Optionally, as described above, the block header fetching unit 101 may determine an address of a next block header (namely, a location to which a BPC points) through branch prediction based on a branch type indicated in an (i-1)^{th} block header, and obtain the next block header, to improve block header fetching efficiency.

The block dispatch unit 102 is configured to dispatch the i^{th} block header to a j^{th} block execution unit based on first information indicated by the i^{th} block header. The j^{th} block execution unit is, for example, one of the block execution unit 31, the block execution unit 32, the block execution unit 33, and the like shown in FIG. 9. As shown above, the first information may include input register information and output register information of an i^{th} block instruction to which the i^{th} block header belongs. The i^{th} block header has a large quantity of or even a maximum quantity of dependencies with another block header previously dispatched to the j^{th} block execution unit, so that to-be-executed block instructions of different block execution units almost have no dependency, and different block execution units almost exchange no data, to ensure reliable parallelism of a plurality of block execution units.

The j^{th} block execution unit (for example, the block execution unit 31) is configured to obtain and execute the i^{th} block body based on second information indicated by the i^{th} block header. The second information includes a storage location of the i^{th} block body (namely, a location to which a TPC points). Similarly, in a scenario such as high-performance computing, to improve block body fetching efficiency, a block body cache may be further disposed in the block processor 10. The block execution unit 31, the block execution unit 32, the block execution unit 33, and the like may directly obtain the i^{th} block body from the block body cache.

As described above, an execution result written (set) by each block instruction may be temporarily stored in a shadow register. Finally, each block execution unit in the block processor 10 may sequentially commit, to a corresponding general-purpose register based on a block header fetching sequence, an execution result temporarily stored by a corresponding block instruction in a shadow register.

In conclusion, the block processor provided in this embodiment of this application is implemented based on a new-type CPU of a block instruction. Different from another block processor, in this embodiment of this application, the block instruction is separated into two parts: a block header and a block body. Therefore, the block processor in this embodiment of this application has at least two fetching units: the block header fetching unit 101, the block execution unit 31, and the like, and is configured to respectively fetch a block header instruction and a block body instruction from locations to which the BPC and the TPC point, to greatly improve overall execution efficiency of the block instruction.

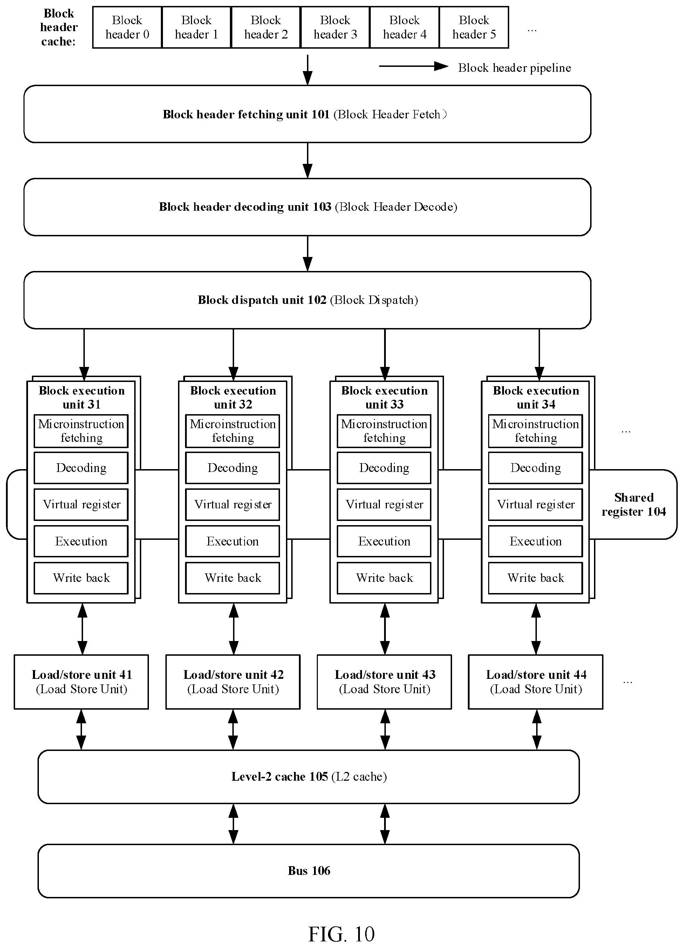

Further, FIG. 10 is a diagram of a structure of another block processor according to an embodiment of this application. As shown in FIG. 10, a block processor 10 may include a block header cache, a block header fetching unit 101, a block header decoding unit 103, a block dispatch unit 102, a plurality of block execution units such as a block execution unit 31, a block execution unit 32, a block execution unit 33, and a block execution unit 34, a shared register 104, a plurality of load/store units such as a load/store unit 41, a load/store unit 42, a load/store unit 43, and a load/store unit 44, a level-2 cache 105, and a bus 106.

The block header fetching unit 101 is configured to obtain a block header in sequence from the block header cache, usually, obtain one block header in one clock cycle. For a specific function of the block header fetching unit 101, refer to the description in the embodiment corresponding to FIG. 5. Details are not described herein again.

The block header decoding unit 103 is configured to: decode the block header, and send a decoding result to the block dispatch unit 102.

The block dispatch unit 102 is configured to: mine a dependency and a degree of parallelism between blocks based on information (for example, including input/output register information) indicated in the block header, and dispatch each block header to a corresponding pipeline for execution, that is, dispatch the block header to a corresponding block execution unit.

The block execution unit 31 and the like are configured to sequentially obtain each microinstruction in a block body corresponding to a current block header based on the information (for example, a storage location of a block body, namely, a block body branch pointer offset) indicated in the block header, and execute the microinstruction. As shown in FIG. 10, in some possible embodiments, the block execution unit 31 and the like may execute the microinstruction based on a classic five-level pipeline. In addition, if a microinstruction is abnormally terminated in an execution process, the block execution unit 31 and the like may commit an intra-block state of a current block instruction to the shared register 104, so that a corresponding program subsequently accesses the shared register 104 to obtain the intra-block state and process the exception. Optionally, a level-1 cache may be disposed in each block execution unit such as the block execution unit 31, and is configured to read the microinstruction. As shown in FIG. 10, the block execution unit 31 and the like are connected to the load/store unit 42 and the like in a one-to-one correspondence. The load/store unit 42 and the like are configured to commit an execution result of a block instruction executed on a corresponding block execution unit.

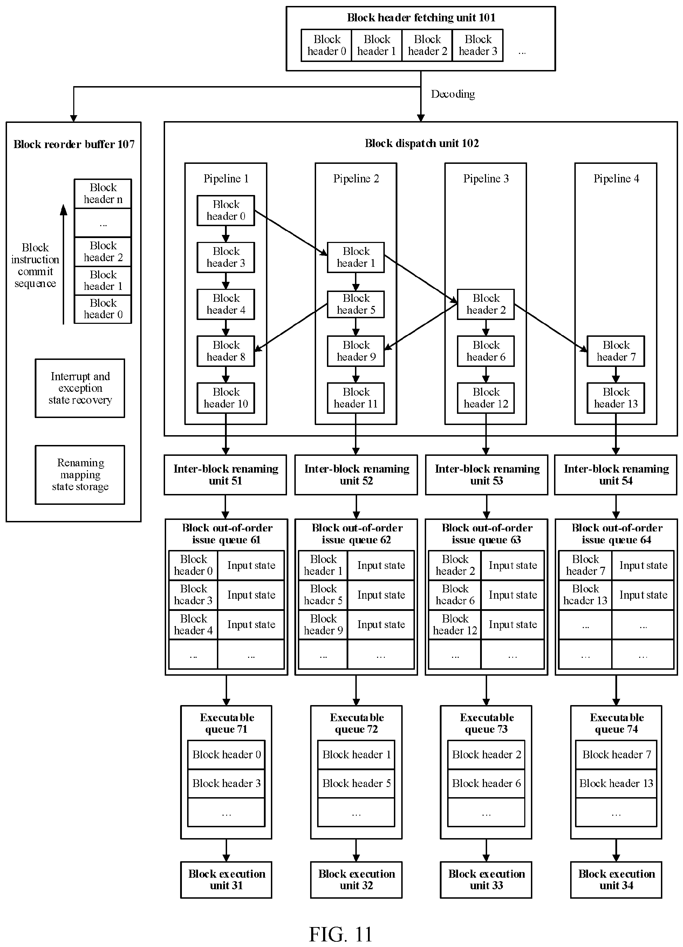

Still further, FIG. 11 is a diagram of a structure of still another block processor according to an embodiment of this application. As shown in FIG. 11, a block processor 10 may include a block header fetching unit 101, a block dispatch unit 102, a plurality of inter-block renaming units (for example, including an inter-block renaming unit 51, an inter-block renaming unit 52, an inter-block renaming unit 53, and an inter-block renaming unit 54), a plurality of block out-of-order issue queues (for example, including a block out-of-order issue queue 61, a block out-of-order issue queue 62, a block out-of-order issue queue 63, and a block out-of-order issue queue 64), a plurality of executable queues (for example, including an executable queue 71, an executable queue 72, an executable queue 73, and an executable queue 74), a plurality of block execution units (for example, including a block execution unit 31, a block execution unit 32, a block execution unit 33, and a block execution unit 34), and a block reorder buffer 107.

The following uses four parallel execution pipelines shown in FIG. 11 as an example to describe main logic of parsing a block header by the block processor. The following several phases are mainly included:
(1) Block header fetch
   As shown in FIG. 11, the block header fetching unit 101 sequentially fetches block headers such as a block header 0, a block header 1, a block header 2, and a block header 3 of different block instructions from a block header cache.
(2) Block header dispatch

As shown in FIG. 11, after a block header is decoded, the block dispatch unit 102 sequentially dispatches, based on register input/output dependencies, the block header 0, the block header 1, the block header 2, the block header 3, and the like to a pipeline that has most dependencies with the block header 0, the block header 1, the block header 2, the block header 3, and the like. As shown in FIG. 11, the block dispatch unit 102 dispatches the block header 0, the block header 3, a block header 4, a block header 8, and a block header 10 to a pipeline 1; dispatches the block header 1, a block header 5, a block header 9, and a block header 11 to a pipeline 2; dispatches the block header 2, a block header 6, and a block header 12 to a pipeline 3; and dispatches a block header 7 and a block header 13 to a pipeline 4.

As shown in FIG. 11, there is a strong input/output dependency between a plurality of block headers in each pipeline, and there are a small quantity of dependencies between block headers in different pipelines. For example, input and output dependencies successively exist between the block header 0, the block header 3, the block header 4, the block header 8, and the block header 10 in the pipeline 1. For another example, only an input of the block header 8 in the pipeline 1 has a dependency with an output of the block header 1 in the pipeline 2. For another example, only an input of the block header 1 in the pipeline 2 has a dependency with an output of the block header 0 in the pipeline 1; only an input of the block header 7 in the pipeline 4 has a dependency with an output of the block header 2 in the pipeline 3; and the like. Details are not described herein again.

Usually, the block header fetching unit 101 fetches a block header, and the block dispatch unit 102 may immediately dispatch the block header. For example, the block header fetching unit 101 fetches the block header 0 in sequence, and after decoding, the block dispatch unit 102 may dispatch the block header 0 to the pipeline 1 (the corresponding block execution unit 31). Subsequently, the block header fetching unit 101 fetches the block header 1 in sequence, and after decoding, the block dispatch unit 102 may dispatch the block header 1 to the pipeline 2 (the corresponding block execution unit 32), and the like.

### (3) Inter-block renaming

As shown in FIG. 11, the block header inter-block renaming unit 51 and the like are configured to direct an input/output dependency relationship between different block headers to an inter-block communication network and a physical register, in other words, specify an input/output dependency between blocks with a specific general-purpose register, that is, a specific block instruction from which an input of a current block instruction comes and a specific general-purpose register to which the input of the current block instruction is output.

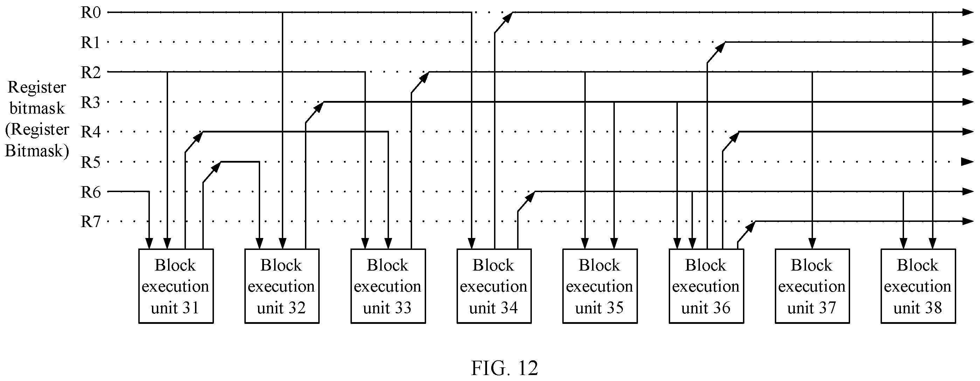

For example, FIG. 12 is a diagram of a ring network according to an embodiment of this application. An interconnection configuration for inter-block communication may be determined based on input/output information indicated in a block header. As described in FIG. 2, each block instruction has a maximum of 32 inputs and 32 outputs. In FIG. 12, a ring network configured between eight general-purpose registers and eight block execution units is used as an example for description. A configuration of the ring network is mainly related to a quantity of block execution units in the block processor 10.

As shown in FIG. 12, the block execution unit 31 executes corresponding block instructions (for example, a block instruction 0, a block instruction 3, and a block instruction 4), to obtain inputs from R2 and R6 and output execution results to R4 and R5; the block execution unit 32 executes corresponding block instructions (for example, a block instruction 1 and a block instruction 5), to obtain inputs from R4 and R5 and output an execution result to R3; the block execution unit 33 executes corresponding block instructions, to obtain inputs from R2 and R4 and output an execution result to R2; the block execution unit 34 executes a corresponding block instruction, to obtain an input from R0 and outputs execution results to R0 and R6; the block execution unit 35 executes corresponding block instructions, to obtain inputs from R2 and R3 and produce no output; the block execution unit 36 executes corresponding block instructions, to obtain inputs from R3 and R6 and output execution results to R1, R4, and R7; and the like. Details are not described herein again.

### (4) Block out-of-order issue queue and executable queue

As shown in FIG. 11, block headers in a corresponding pipeline sequentially enter a block out-of-order issue queue. For example, the block header 0, the block header 3, the block header 4, and the like enter the block out-of-order issue queue 61; and the block header 1, the block header 5, the block header 9, and the like enter the block out-of-order issue queue 62; and the like. Details are not described herein again. Examples are as follows.

As shown in FIG. 11, in the block out-of-order issue queue 61 and the like, each block header corresponds to an input state, and the input state is an arrival state of an input register of each block header. For example, if inputs of the block header 1 and the block header 3 come from an output of the block header 0, after execution of all microinstructions in the block body 0 corresponding to the block header 0 is completed (that is, after execution of the block instruction 0 is completed), the block body 0 outputs a corresponding execution result. In this case, input registers of the block header 3 and the block header 1 both arrive, and the block header 1 and the block header 3 may respectively enter the executable queue 71 and the executable queue 72. For another example, inputs of the block header 8 and the block header 9 are from an output of the block header 5. If the block instruction 5 corresponding to the block header 5 is large and execution has been performed for a long time, input registers of the block header 8 and the block header 9 are always in an unarrival state, and the block header 8 and the block header 9 cannot enter corresponding executable queues.

It should be understood that, an input state of a block instruction without a dependency does not need to be considered, and the block instruction may be directly issued to an executable queue for execution. For example, a block header 0 has no input dependency, and may be directly issued to the executable queue 71.

In addition, a dependency relationship that may be incorrect in the block dispatch unit 102 can be further detected in an inter-block renaming phase. For example, in the block dispatch unit 102, an input of the block header 4 in the pipeline 1 has a dependency with an output of the block header 3, but the inter-block renaming unit 51 may find that there is no dependency relationship between the block header 4 and the block header 3. In this case, the block header 3 and the block header 4 may be executed out of order. To be specific, in the block out-of-order issue queue 61, the block header 4 may be issued and executed before the block header 3.

### (5) Block body execution

As shown in FIG. 11, the block execution units 31 and the like parse block headers in respectively corresponding executable queues, obtain corresponding block body locations, and start to execute a series of microinstructions in block bodies. For example, the block execution unit 31 sequentially parses the block header 0, the block header 3, and the like, and then sequentially obtains and executes the corresponding block body 0, a corresponding block body 3, and the like. The block execution unit 32 sequentially parses the block header 1, the block header 5, and the like, and then sequentially obtains and executes a corresponding block body 1, a corresponding block body 5, and the like. Details are not described herein again.

It may be understood that, as shown in FIG. 11, block instructions are usually executed out of order. In addition, because sizes of all block instructions are different, execution of some small block instructions is completed, but execution of block instructions before the small block instructions may not be started. For example, in FIG. 11, a block instruction 7 corresponding to the block header 7 is small, and a block instruction 6 corresponding to the block header 6 is large. In this case, after execution of the block instruction 7 is completed, a large quantity of microinstructions in the block instruction 6 may still not be executed. However, after out-of-order execution of block instructions is completed, the block instructions still need to be committed in sequence finally. Based on this, as shown in FIG. 11, a block reorder buffer 107 is further disposed in the block processor 10. The block reorder buffer 107 may be configured to maintain in-order committing of the block instructions (in an order in which block headers are fetched). As described above, to ensure a degree of parallelism between the block instructions, an execution result may be first output to a shadow register when the block instructions are executed. The execution result of the block instruction can be committed to a corresponding general-purpose register only when execution of other block instructions before the block instruction is completed. For example, as shown in FIG. 11, if execution of only the block instruction 0, the block instruction 1, the block instruction 3, and the block instruction 5 is completed in this case, execution results of the block instruction 0 and the block instruction 1 may be successfully committed. Because execution of the block instruction 2 and the block instruction 4 is not completed, the block instruction 3 and the block instruction 5 cannot be committed temporarily, and can only wait in the block reorder buffer 107. The block instruction 2 and the block instruction 3 can be committed in sequence only after execution of the block instruction 2 is completed, and the block instruction 4 and the block instruction 5 can be committed in sequence only after execution of the block instruction 4 is also completed.

As shown in FIG. 11, the block reorder buffer 107 may be further configured to store a renaming mapping state, that is, store a dependency relationship between input/output registers of blocks, a mapping relationship between a shadow register and a general-purpose register of each block instruction, and the like.

In conclusion, the block processor 10 provided in this embodiment of this application may mine a dependency and a degree of parallelism between blocks by parsing information about a block header, and issue different blocks to parallel pipelines for execution. The block header mainly includes input/output information of a block and a branch relationship between blocks. The block processor 10 parses the block header, to efficiently resolve an inter-block dependency based on hardware units of all components shown in FIG. 11, and performs optimistic concurrent execution on a block instruction, to greatly improve block instruction execution efficiency.

It should be understood that structures illustrated embodiments of this application do not constitute a specific limitation on the block processor 10. In some possible embodiments, the block processor 10 may have more or fewer components than those shown in FIG. 9, FIG. 10, and FIG. 11, or combine some components, or split some components, or have different component arrangements. The various components shown in the figure may be implemented in hardware, software, or a combination of hardware and software including one or more signal processing and/or application-specific integrated circuits. In addition, an interface connection relationship between the modules illustrated in embodiments of this application is merely an example for description, and does not constitute a limitation on the structure of the block processor 10. In some possible embodiments, different interface connection manners in the foregoing embodiments or a combination of a plurality of interface connection manners may alternatively be used for the block processor 10.

In conclusion, embodiments of this application provide a block instruction structure, and provide a block instruction processing method and a corresponding block processor based on the block instruction structure. In embodiments of this application, a conventional block instruction is separated into two parts: a block header and a block body. In other words, each block instruction includes one block header and one block body. The block header is mainly used to express a dependency relationship between block instructions, the block body is mainly used to express specific computing, and the block body may include a plurality of microinstructions. Based on this, in embodiments of this application, block headers of a plurality of block instructions may be first obtained continuously and quickly, and the block headers are sequentially dispatched to corresponding block execution units based on input register information and output register information indicated by each block header, so that there is almost no dependency between to-be-executed block instructions of different block execution units, to ensure reliable parallelism of the plurality of block execution units. Then, the block execution unit may quickly obtain a corresponding block body based on a block body storage location indicated by the block header and execute the block body. In this way, compared with a solution in which the entire block instruction can be subsequently dispatched and executed only after being completely fetched, and consequently, instruction execution efficiency is low in the conventional technology, in embodiments of this application, a block instruction structure is fundamentally improved, and a block header is obtained and parsed in advance, to implement pre-scheduling of the block body, greatly improve block instruction execution efficiency, and improve performance of the block processor.

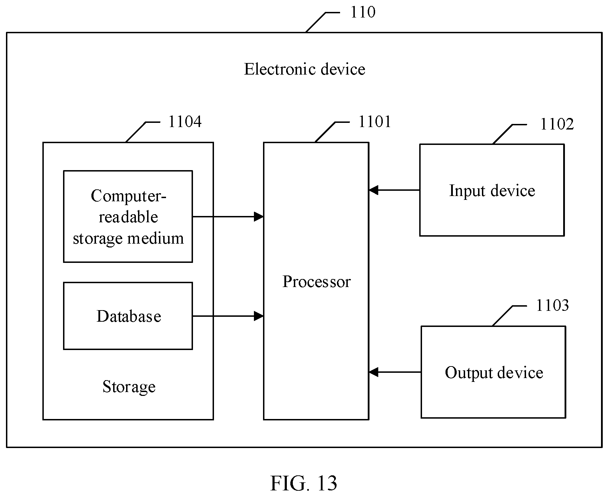

Based on the descriptions of the foregoing method embodiments, an embodiment of this application further provides an electronic device. FIG. 13 is a diagram of a structure of an electronic device according to an embodiment of this application. As shown in FIG. 13, an electronic device 110 includes at least a processor 1101, an input device 1102, an output device 1103, and a storage 1104. The electronic device may further include another general-purpose component. Details are not described herein again. The processor 1101, the input device 1102, the output device 1103, and the storage 1104 in the electronic device may be connected through a bus or in another manner. The electronic device 110 may be a smart wearable device, a smartphone, a tablet computer, a notebook computer, a desktop computer, a vehicle-mounted computer, a server, or the like, or may be a server cluster or a cloud computing service center including a plurality of servers.

The processor 1101 in the electronic device 110 may be the block processor in FIG. 9, FIG. 10, or FIG. 11.

The storage 1104 in the electronic device 110 may be a read-only memory (read-only memory, ROM) or another type of static storage device that may store static information and instructions, or a random access memory (random access memory, RAM) or another type of dynamic storage device that may store information and instructions; or may be an electrically erasable programmable read-only memory (Electrically Erasable Programmable Read-Only Memory, EEPROM), a compact disc read-only memory (Compact Disc Read-Only Memory, CD-ROM), or another compact disc storage, an optical disc storage (including a compact disc, a laser disc, an optical disc, a digital versatile disc, and a Blu-ray disc, or the like), a disk storage medium or another disk storage device, or any other medium that can be used to carry or store expected program code in an instruction or data structure form and that can be accessed by a computer. However, the storage 1104 is not limited thereto. The storage 1104 may exist independently and is connected to the processor 1101 through the bus. The storage 1104 may alternatively be integrated with the processor 1101.

The computer-readable storage medium may be stored in the storage 1104 in the electronic device 110. The computer-readable storage medium is configured to store a computer program, the computer program includes program instructions, and the processor 1101 is configured to execute the program instructions stored in the computer-readable storage medium. The processor 1101 (or referred to as a CPU (Central Processing Unit, central processing unit)) is a computing core and a control core of the electronic device 110. The processor 1101 is suitable for implementing one or more instructions, and is specifically suitable for loading and executing one or more instructions to implement a corresponding method procedure or a corresponding function. In an embodiment, the processor 1101 in this embodiment of this application may be configured to perform a series of processing in the block instruction processing method, including: obtaining an i^{th} block header in sequence; dispatching the i^{th} block header to a j^{th} block execution unit based on first information indicated by the i^{th} block header, where the first information indicated by the i^{th} block header includes input register information and output register information of an i^{th} block instruction to which the i^{th} block header belongs; and obtaining and executing, by the j^{th} block execution unit, an i^{th} block body based on second information indicated by the i^{th} block header. The i^{th} block body is a block body of the i^{th} block instruction, the i^{th} block body includes N microinstructions, the second information indicated by the i^{th} block header includes a storage location of the i^{th} block body, i is an integer greater than 1, j and N are integers greater than or equal to 1, and the like. For details, refer to related descriptions in embodiments corresponding to FIG. 1a to FIG. 12. Details are not described herein again.

An embodiment of this application further provides a computer-readable storage medium. The computer-readable storage medium may store a program. When the program is executed by a processor, the processor is enabled to perform some or all steps recorded in any one of the foregoing method embodiments.

An embodiment of this application further provides a computer program. The computer program includes instructions. When the computer program is executed by a multi-core processor, the processor is enabled to perform some or all steps recorded in any one of the foregoing method embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, in other words, may be located at one location, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in the computer device) to perform all or some of the steps of the methods described in embodiments of this application. The foregoing storage medium may include various media that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A block instruction processing method, wherein the block instruction comprises a block header and a block body, and the method comprises:
obtaining an i^{th} block header;
dispatching the i^{th} block header to a j^{th} block execution unit based on first information indicated by the i^{th} block header, wherein the first information indicated by the i^{th} block header comprises input register information and output register information of an i^{th} block instruction corresponding to the i^{th} block header;
obtaining, by the j^{th} block execution unit, an i^{th} block body based on second information indicated by the i^{th} block header, wherein the i^{th} block body corresponds to a block body of the i^{th} block instruction, the second information indicated by the i^{th} block header comprises a storage location of the i^{th} block body, i is an integer greater than 1, and j is an integer greater than or equal to 1; and
executing N microinstructions comprised in the i^{th} block body, wherein N is an integer greater than or equal to 1.

2. The method according to claim 1, wherein the i^{th} block header is located in a first storage area, the i^{th} block body is located in a second storage area, the first storage area stores a plurality of block headers, the second storage area stores a plurality of block bodies, and the first storage area and the second storage area are storage areas obtained in advance through division in a memory.

3. The method according to either of claims 1 and 2, wherein the method further comprises:
obtaining an (i-1)^{th} block header, wherein the (i-1)^{th} block header corresponds to a block header of an (i-1)^{th} block instruction; and
the obtaining an i^{th} block header comprises:
determining, based on third information indicated by the (i-1)^{th} block header, the i^{th} block instruction executed after the (i-1)^{th} block instruction, and obtaining the i^{th} block header, wherein the third information indicated by the (i-1)^{th} block header comprises a branch type of the (i-1)^{th} block instruction.

4. The method according to any one of claims 1 to 3, wherein the storage location of the i^{th} block body comprises respective storage locations of the N microinstructions in the i^{th} block body, and the obtaining an i^{th} block body based on second information indicated by the i^{th} block header comprises:
obtaining a k^{th} microinstruction from a storage location corresponding to the k^{th} microinstruction, wherein k is an integer greater than or equal to 1 and less than or equal to N; and
the executing N microinstructions comprised in the i^{th} block body comprises: executing the k^{th} microinstruction.

5. The method according to claim 4, wherein the i^{th} block body corresponds to N virtual registers, the N virtual registers are in a one-to-one correspondence with the N microinstructions in the i^{th} block body, and each virtual register is configured to store an execution result obtained after a corresponding microinstruction is executed.

6. The method according to claim 5, wherein the executing the k^{th} microinstruction comprises:
determining, based on a decoding result of the k^{th} microinstruction, that input data of the k^{th} microinstruction comprises an execution result of a p^{th} microinstruction in the N microinstructions;
obtaining the execution result of the p^{th} microinstruction from a p^{th} virtual register based on a relative distance k-p between the k^{th} microinstruction and the p^{th} microinstruction, and obtaining an execution result of the k^{th} microinstruction based on the execution result of the p^{th} microinstruction, wherein p is an integer greater than 1 or equal to 1 and less than k; and
outputting the execution result of the k^{th} microinstruction to a corresponding k^{th} virtual register for storage.

7. The method according to any one of claims 4 to 6, wherein the method further comprises:
committing a current intra-block state of the i^{th} block instruction to a system register if the k^{th} microinstruction is terminated abnormally, wherein the system register is configured to be accessed by a target program to obtain the intra-block state and process abnormal termination of the k^{th} microinstruction, wherein
the intra-block state comprises: a storage location of the i^{th} block header, the storage location of the k^{th} microinstruction, and an execution result of a microinstruction executed before the k^{th} microinstruction.

8. The method according to any one of claims 1 to 7, wherein the i^{th} block header further indicates an attribute and a type of the i^{th} block instruction, the attribute comprises any one or more of a commit policy, atomicity, visibility, and ordering of the i^{th} block instruction, and the type comprises any one or more of a fixed point, a floating point, a custom block body, and accelerator invocation.

9. A block instruction processor, wherein the block instruction comprises a block header and a block body, and the block instruction processor comprises a block header fetching unit, a block dispatch unit, and a plurality of block execution units;
the block header fetching unit is configured to obtain an i^{th} block header;
the block dispatch unit is configured to dispatch the i^{th} block header to a j^{th} block execution unit based on first information indicated by the i^{th} block header, wherein the first information indicated by the i^{th} block header comprises input register information and output register information of an i^{th} block instruction corresponding to the i^{th} block header;
the j^{th} block execution unit is configured to obtain an i^{th} block body based on second information indicated by the i^{th} block header, wherein the i^{th} block body corresponds to a block body of the i^{th} block instruction, the second information indicated by the i^{th} block header comprises a storage location of the i^{th} block body, i is an integer greater than 1, and j is an integer greater than or equal to 1; and
the j^{th} block execution unit is further configured to execute N microinstructions comprised in the i^{th} block body, wherein N is an integer greater than or equal to 1.

10. The block instruction processor according to claim 9, wherein the i^{th} block header is located in a first storage area in a memory, the i^{th} block body is located in a second storage area in the memory, the first storage area stores a plurality of block headers, the second storage area stores a plurality of block bodies, and the first storage area and the second storage area are storage areas obtained in advance through division in the memory.

11. The block instruction processor according to either of claims 9 and 10, wherein the block header fetching unit is further configured to obtain an (i-1)^{th} block header, wherein the (i-1)^{th} block header corresponds to a block header of an (i-1)^{th} block instruction; and
the block header fetching unit is specifically configured to: determine, based on third information indicated by the (i-1)^{th} block header, the i^{th} block instruction executed after the (i-1)^{th} block instruction, and obtain the i^{th} block header, wherein the third information indicated by the (i-1)^{th} block header comprises a branch type of the (i-1)^{th} block instruction.

12. The block instruction processor according to any one of claims 9 to 11, wherein the storage location of the i^{th} block body comprises respective storage locations of the N microinstructions in the i^{th} block body, and the j^{th} block execution unit is specifically configured to:
obtain a k^{th} microinstruction from a storage location corresponding to the k^{th} microinstruction, wherein k is an integer greater than or equal to 1 and less than or equal to N; and
execute the k^{th} microinstruction.

13. The block instruction processor according to claim 12, wherein the i^{th} block body corresponds to N virtual registers, the N virtual registers are in a one-to-one correspondence with the N microinstructions in the i^{th} block body, and each virtual register is configured to store an execution result obtained after a corresponding microinstruction is executed.

14. The block instruction processor according to claim 13, wherein the j^{th} block execution unit is specifically configured to:
determine, based on a decoding result of the k^{th} microinstruction, that input data of the k^{th} microinstruction comprises an execution result of a p^{th} microinstruction in the N microinstructions;
obtain the execution result of the p^{th} microinstruction from a p^{th} virtual register based on a relative distance k-p between the k^{th} microinstruction and the p^{th} microinstruction, and obtain an execution result of the k^{th} microinstruction based on the execution result of the p^{th} microinstruction, wherein p is an integer greater than 1 or equal to 1 and less than k; and
output the execution result of the k^{th} microinstruction to a corresponding k^{th} virtual register for storage.

15. The block instruction processor according to any one of claims 12 to 14, wherein the j^{th} block execution unit is further configured to:
commit a current intra-block state of the i^{th} block instruction to a system register if the k^{th} microinstruction is terminated abnormally, wherein the system register is configured to be accessed by a target program to obtain the intra-block state and process abnormal termination of the k^{th} microinstruction, wherein
the intra-block state comprises: a storage location of the i^{th} block header, the storage location of the k^{th} microinstruction, and an execution result of a microinstruction executed before the k^{th} microinstruction.

16. The block instruction processor according to any one of claims 9 to 15, wherein the i^{th} block header further indicates an attribute and a type of the i^{th} block instruction, the attribute comprises any one or more of a commit policy, atomicity, visibility, and ordering of the i^{th} block instruction, and the type comprises any one or more of a fixed point, a floating point, a custom block body, and accelerator invocation.

17. A computer-readable storage medium, wherein the computer-readable storage medium stores a computer program, and when the computer program is executed by a processor, the method according to any one of claims 1 to 8 is implemented.

18. A chip, wherein the chip comprises a storage and the block instruction processor according to any one of claims 9 to 16, the block instruction processor is coupled to the storage, and the block instruction processor is configured to invoke program code stored in the storage, to perform the method according to any one of claims 1 to 8.
